# EUROPÄISCHE PATENTSCHRIFT

(11) **EP 3 370 851 B1**
(45) Veröffentlichungstag und Bekanntmachung des Hinweises auf die Patenterteilung: **03.06.2020**
(21) Anmeldenummer: 16785378.7
(22) Anmeldetag: 05.10.2016
(51) Int. Cl.: B01D 46/00, B01D 46/10, B01D 46/24, B01D 46/52, B01D 29/01, B01D 29/07, B01D 29/11, B01D 29/21, B01D 29/92

(54) **FILTERELEMENT UND FILTERANORDNUNG**
FILTER ELEMENT AND FILTER ASSEMBLY
ÉLÉMENT FILTRANT ET ENSEMBLE FILTRE

(30) Priorität: 04.11.2015 DE 102015014113
(43) Veröffentlichungstag der Anmeldung: 12.09.2018
(73) Patentinhaber: Mann+Hummel GmbH, 71636 Ludwigsburg (DE)
(72) Erfinder: PFLÜGER, Frank, 74343 Sachsenheim (DE)
(74) Vertreter: Seyboth, Matthias
(86) Internationale Anmeldenummer: PCT/EP2016/073753
(87) Internationale Veröffentlichungsnummer: WO 2017/076566

(56) Entgegenhaltungen:
- DE-A1-102008 028 834
- DE-U1-202006 020 790
- US-A- 3 061 105
- US-A- 5 858 227
- US-A1- 2009 050 554

## Beschreibung

### Technisches Gebiet

Die vorliegende Erfindung betrifft ein Filterelement, sowie eine Filteranordnung mit einem derartigen Filterelement.

### Stand der Technik

Im Kraftfahrzeugbereich sind häufig Gase, wie Luft, oder flüssige Betriebsmittel, wie beispielsweise Kraftstoffe, wie Benzin, Diesel, Schmierstoffe, wie Öl oder auch Harnstofflösungen von Verunreinigungen zu befreien. Hierzu werden meist Filterelemente verwendet, die in ein Filtergehäuse oder eine Filteraufnahme eingesetzt werden. Die Filterelemente selbst umfassen dabei ein meist flächiges und gefaltetes Filtermedium, welches zwischen Endscheiben oder Endkappen vorgesehen ist und radial durchströmt wird. Bekannt sind insbesondere zylinderförmige Gehäuse und Filterelementgeometrien. Meist sind aufgrund der Einbausituationen geometrische Vorgaben an das jeweilige Filterelement, die Filteraufnahme und an Zu- und Ableitungen für Rein- und Rohfluid gegeben. Wünschenswert ist es, auf kleinem Bauraum eine möglichst große Filterfläche einzusetzen.

Die DE 10 2013 218 694 A1 beschreibt eine Filteranordnung mit einem Gehäuse, das eine erste Abdeckung und eine zweite Abdeckung umfasst, einem sich in dem Gehäuse befindenden Gitter, das miteinander verbundene Rippen und Streifen enthält, und einem mit dem Gitter einstückigen Filtermedium, das eine Umfangsbreite enthält, die sich zwischen den Abdeckungen befindet.

Die DE 10 2013 217 333 A1 beschreibt einen Im-Tank-Filter zum Filtern einer Flüssigkeit mit einer ersten Filterseite und einer zweiten Filterseite. Zwischen diesen ist ein Aufnahmeraum angeordnet. Ferner ist über einen Anschluss gefilterte Flüssigkeit aus dem Aufnahmeraum ableitbar. Zum Bilden eines Gehäuses ist eine ringförmige Umfangswand vorgesehen, welche die erste Filterseite und die zweite Filterseite umschließt, wobei zumindest eine Filterseite ein plissiertes Filtermedium aufweist.

US 5,858,227 und DE 102008028834 offenbaren Ringfilter mit Fluidführungskanälen in den Endscheiben.

### Offenbarung der Erfindung

Es ist daher Aufgabe der vorliegenden Erfindung, ein verbessertes Filterelement zur Verfügung zu stellen.

Demgemäß wird ein Filterelement mit einem gefalteten Filtermedium und einem Stützrahmen, mit dem das Filtermedium verbunden ist, vorgeschlagen, wobei das Filtermedium zwischen einem ersten Endscheibenabschnitt und einem zweiten Endscheibenabschnitt des Stützrahmens angeordnet ist und wobei der Stützrahmen einen Fluidführungskanal aufweist, der dazu eingerichtet ist, bei einem Durchströmen des Filtermediums mit einem Fluid das Fluid so zu leiten, dass es an einer dem Filtermedium abgewandten Seite eines der Endscheibenabschnitte entlang führbar ist.

Das Filterelement ist dazu eingerichtet, Fluide, wie beispielsweise Luft oder andere Gase, Flüssigkeiten, insbesondere flüssige Betriebsmittel eines Fahrzeugs, insbesondere eines Kraftfahrzeugs, wie Öl, Wasser, Diesel, Benzin, Kerosin oder Harnstofflösung zu filtern. Insbesondere ist das Filterelement ein Luftfilterelement. Das Filterelement kann Anwendung in Kraftfahrzeugen, Wasserfahrzeugen, Schienenfahrzeugen, landwirtschaftlichen Fahrzeugen, Baumaschinen, Luftfahrzeugen oder dergleichen finden. Ferner kann das Filterelement auch bei immobilen Anwendungen, wie beispielsweise in der Gebäudetechnik, eingesetzt werden.

Insofern ist das Filterelement in einer Ausführungsform als Luftfilterelement für Verbrennungsluft einer Verbrennungskraftmaschine eingerichtet.

In einer weiteren Ausführungsform ist das Filterelement als Flüssigkeitsfilter ausgestaltet. Das Filtermedium ist dann insbesondere angepasst flüssige Betriebsmittel eines Kraftfahrzeugs zu filtern.

Das Filtermedium kann zum Beispiel ein synthetisches Vliesmaterial, Papier, Gelege oder Gewebe umfassen. Das Filtermedium kann einlagig oder mehrlagig sein. Das Filtermedium kann plissiert sein. Das Filtermedium bildet einen zickzackförmig oder ziehharmonikaförmig gefalteten Faltenbalg. Insbesondere ist der Stützrahmen stoffschlüssig mit dem Filtermedium verbunden, beispielsweise verklebt oder verscheißt. Insbesondere bei einer Ausgestaltung als Flüssigkeitsfilter kann ein festes Verbinden des Stützrahmens mit dem Filtermedium die Stabilität des Filtermediums beim Durchströmen verbessern und ein Verformen reduzieren, da die eingesetzten Filtermedien zur Flüssigfilterung eine geringere Eigenfestigkeit haben können als beispielsweise Filtermedien zur Ansaugluftfilterung.

Faltabschnitte des Filtermediums bzw. des Faltenbalgs können in Ausführungsformen unterschiedliche oder variable Faltenhöhen aufweisen. Hierdurch kann der vorhandene Bauraum optimal ausgenutzt werden. Unter einer Faltenhöhe ist beispielsweise der Abstand zwischen benachbarten Faltkanten eines Faltabschnitts zu verstehen.

Der Faltenbalg kann eine kreisbogenförmige Außengeometrie aufweisen, die von einer bogenförmigen, insbesondere kreisbogenförmigen, Einhüllenden der Faltkanten gebildet wird. Man kann von einem Endlosfaltenbalgsprechen.

Das Filtermedium, welches beispielsweise als Faltenpack oder Balg ein geometrisches Volumen umfasst und der Fluidführungskanal als ein Teil des Filterelementes sind vorzugsweise derart ausgestaltet, dass bei bestimmungsgemäßem Gebrauch des Filterelements eine Strömung von Fluid einerseits durch das entsprechende Volumen hindurch erfolgt und andererseits in entgegengesetzter Richtung an dem Volumen bzw. dem Filtermedium vorbei. Man kann sagen, dass das innerhalb des Filterelements in gewissem Maße eine Strömungsrichtungsumkehr erfolgt. Dies kann insbesondere mit Hilfe des Fluidführungskanals erfolgen, der eine Fluidströmungsrichtung zumindest teilweise umlenkt und/oder das Fluid entlang einer umgelenkten Fluidströmungsrichtung führt.

Das von seinen äußeren Begrenzungsflächen des Filtermediums "eingeschlossene Volumen" kann insbesondere durch Beschneiden oder Verformen von Faltungen gebildet sein.

Das Filterelement umfasst insbesondere eine Rohseite und eine Reinseite, wobei im Betrieb des Filterelements das zu reinigende Fluid durch das Filtermedium hindurch von der Rohseite auf die Reinseite strömt. Vorzugsweise ist der Fluidführungskanal dazu eingerichtet, bei dem Durchströmen des Filtermediums mit dem Fluid das Fluid so umzuleiten, dass es an einer dem Filtermedium abgewandten Seite des zweiten End-scheibenabschnitts entlang führbar ist. Im Betrieb des Filterelements strömt das Fluid dann außenseitig, das heißt, dem Faltenbalg abgewandt, über den zweiten Endscheibenabschnitt. Die Umlenkung kann dabei in einem Sammelraum des Filterelements erfolgen, welcher strömungsabwärts des Filtermediums vorliegt.

Der Stützrahmen und gegebenfalls die Endscheiben sind fest mit dem Filtermedium verbunden. Das heißt beispielsweise, dass der Stützrahmen und das Filtermedium nicht zerstörungsfrei voneinander getrennt werden können.

Die Endscheibenabschnitte können zum Beispiel mit senkrecht zu einer Längsrichtung des Faltenbalgs angeordneten Faltprofilen des Faltenbalgs fest verbunden sein. Durch die feste Verbindung des Stützrahmens mit dem Filtermedium kann der Faltenbalg stirnseitig und längsseitig gut abgestützt werden. Hierdurch wird ein Kollabieren des Filtermediums verhindert. Bei der Verwendung einer variablen Faltenhöhe kann im Vergleich zu bekannten Filterelementen, insbesondere bei solchen mit einem sternförmig gefalteten Faltenbalg, eine vergrößerte Oberfläche des Faltenbalgs erreicht werden.

In einer alternativen Ausführungsform sind Endfaltenabschnitte mit jeweils einer Endscheibe bzw. einem Endscheibenabschnitt verbunden, wobei dann die Faltungen des Faltenpacks senkrecht zur Längsrichtung des Filterelements verlaufen.

Der Stützrahmen ist in einem Kunststoffspritzgussverfahren an das Filtermedium angespritzt. Der Stützrahmen ist insbesondere materialeinstückig und weist neben den Endscheibenabschnitten einen rechteckförmigen Rahmenabschnitt auf. Die Endfalten des Filtermediums können mit dem Rahmenabschnitt verbunden sein. Der Stützrahmen ist beispielsweise aus einem Polyamid oder einem Acrylnitril-Butadien-Styrol gefertigt.

In Ausführungsformen ist der Fluidführungskanal so angeordnet, dass einer der Endscheibenabschnitte zwischen dem Fluidführungskanal und dem Filtermedium angeordnet ist. Vorzugsweise ist der zweite Endscheibenabschnitt zwischen dem Fluidführungskanal und dem Filtermedium vorgesehen. Der Fluidführungskanal ist vorzugsweise in dem Stützrahmen gebildet.

In Ausführungsformen ist der Fluidführungskanal dazu eingerichtet, bei dem Durchströmen des Filtermediums mit dem Fluid das Fluid so umzuleiten, dass eine Ausströmrichtung des Fluids durch den Fluidführungskanal entgegen einer Durchströmrichtung des Fluids durch das Filtermedium angeordnet ist. Vorzugsweise ist die Ausströmrichtung um 180° bezüglich der Durchströmrichtung gedreht. Die Ausströmrichtung kann auch schräg und entgegen der Durchströmrichtung, beispielsweise in einem Winkel von 130 bis 175° zu der Durchströmrichtung, gedreht sein.

In Ausführungsformen ist die Durchströmrichtung senkrecht zu Faltkanten des Filtermediums angeordnet. Vorzugsweise verlaufen die Faltkanten in der Längsrichtung des Faltenbalgs. Die Durchströmrichtung ist vorzugsweise senkrecht zu einer Mittelachse des Filterelements positioniert.

In Ausführungsformen bilden der Stützrahmen und ein fest mit dem Stützrahmen verbundenes, insbesondere verschweißtes oder verklebtes, Gehäuse- oder Abdeckelement einen äußeren Abschluss oder ein Gehäuse des Filterelements. Das Gehäuseelement ist vorzugsweise ein Kunststoffspritzgussbauteil. Hierdurch kann es kostengünstig in hohen Stückzahlen hergestellt werden.

Das Gehäuse- oder Abdeckelement ist verzichtbar. Alternativ kann anstatt des Gehäuseelements rückseitig, das heißt, dem Faltenbalg abgewandt, ein umlaufendes Dichtelement zum direkten Abdichten des Stützrahmens gegenüber einer Filteraufnahme des Filterelements vorgesehen sein. Insofern wird die Abdeckung durch eine geeignet geformte Wandung einer Filteraufnahme gebildet.

In Ausführungsformen umfasst das Filterelement ein Abdeckelement, welches einen zwischen der Abströmseite des Filtermediums und dem Abdeckelement vorgesehenen Sammelraum begrenzt. Der Sammelraum ist beispielsweise ein Reinfluidraum und kann ein Teil des Fluidführungskanals sein.

In Ausführungsformen weist das Filterelement eine kreiszylinderförmige Geometrie auf und umfasst einen an einem der Endscheibenabschnitte angeordneten Anschlussstutzen zum Anschließen des Filterelements an eine Filteraufnahme, wobei der Anschlussstutzen zentrisch an der zylinderförmigen Geometrie angeordnet ist. Hierdurch kann das Filterelement in vorhandene Aufnahmen für Filterelemente mit sternförmigem Faltenbalg eingesetzt werden. Dies erweitert den Einsatzbereich des Filterelements. An dem rohrförmigen Anschlussstutzen, der bevorzugt eine kreisförmige Querschnittsgeometrie aufweist, ist vorzugsweise ein Flansch mit einem umlaufenden Dichtelement, insbesondere einem O-Ring, zum Abdichten gegenüber der Filteraufnahme vorgesehen. Vorzugsweise erstreckt sich der Anschlussstutzen, insbesondere senkrecht, oberseitig aus dem zweiten Endscheibenabschnitt heraus. Der Anschlussstutzen kann alternativ einen rechteckförmigen Querschnitt aufweisen und/oder sich schräg aus dem zweiten Endscheibenabschnitt herauserstrecken.

In Ausführungsformen ist der Fluidführungskanal fluidisch mit dem Anschlussstutzen verbunden. Der Fluidführungskanal mündet vorzugsweise seitlich unter einem Winkel von 90° in den Anschlussstutzen ein. Der Fluidführungskanal kann auch in den Anschlussstutzen integriert sein bzw. durch diesen gebildet werden.

In Ausführungsformen weist der Stützrahmen einen zwischen den Endscheibenabschnitten angeordneten Stützabschnitt mit Stützrippen zum Abstützen von Faltabschnitten des Filtermediums auf. Der Stützabschnitt ist vorzugsweise mittig zwischen den Endscheibenabschnitten positioniert. Die Stützrippen erstrecken sich vorzugsweise jeweils über eine gesamte Länge der Faltabschnitte, das heißt, bis in einen Faltengrund einer von zwei benachbarten Faltabschnitten gebildeten Filterfalte. Hierdurch wird ein Kollabieren des Filtermediums beim Durchströmen mit dem Fluid verhindert. Hierdurch können auch sehr dünne und labile Filtermedien Anwendung finden. Insbesondere ist der Stützabschnitt mit den Endscheibenabschnitten und dem Rahmenabschnitt in einem Spritzgussverfahren einteilig an das Filtermedium angespritzt.

Das Filterelement mit integrierter Fluidströmungsumlenkung ist insbesondere als Wechselfilter ausgestaltet und im Ganzen in einer Filteranordnung austauschbar gestaltet. Mit Hilfe des Fluidführungskanals kann eine Sternfaltung des Filtermediums bei gleichzeitig zylindrischer Außenform des Filterelements vermieden werden.

Ferner wird eine Filteranordnung mit einem derartigen Filterelement und einer Filteraufnahme, in der das Filterelement austauschbar aufgenommen ist, vorgeschlagen. Die Filteraufnahme kann auch als Filtergehäuse bezeichnet werden. Die Filteraufnahme umfasst vorzugsweise ein Aufnahmeelement, in das das Filterelement einsteckbar ist, und einen abnehmbaren Deckel zum fluiddichten Verschließen des Aufnahmeelements.

Weitere mögliche Implementierungen des Filterelements und/oder der Filteranordnung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform des Filterelements und/oder der Filteranordnung hinzufügen.

Weitere Ausgestaltungen des Filterelements und/oder der Filteranordnung sind Gegenstand der Unteransprüche sowie der im Folgenden beschriebenen Ausführungsbeispiele des Filterelements und/oder der Filteranordnung. Im Weiteren werden das Filterelement und/oder die Filteranordnung anhand von Ausführungsbeispielen unter Bezugnahme auf die beigelegten Figuren näher erläutert.

### Kurze Beschreibung der Zeichnungen

Es zeigen dabei:
- Fig. 1:: eine schematische perspektivische Ansicht einer Ausführungsform eines Filterelements;
- Fig. 2:: eine schematische perspektivische Schnittansicht des Filterelements gemäß Fig. 1;
- Fig. 3:: eine schematische perspektivische Ansicht einer Ausführungsform eines Stützrahmens für das Filterelement gemäß Fig. 1;
- Fig. 4:: eine schematische perspektivische Ansicht einer Ausführungsform eines Faltenbalgs für das Filterelement gemäß Fig. 1;
- Fig. 5:: eine schematische perspektivische Ansicht einer Ausführungsform eines Gehäuseelements für das Filterelement gemäß Fig. 1;
- Fig. 6:: eine schematische perspektivische Ansicht einer Ausführungsform einer Filteranordnung mit einem Filterelement gemäß Fig. 1;
- Fig. 7:: eine schematische perspektivische Ansicht einer weiteren Ausführungsform eines Filterelements;
- Fig. 8:: eine schematische perspektivische Schnittansicht des Filterelements gemäß Fig. 7;
- Fig. 9:: eine schematische perspektivische Ansicht einer weiteren Ausführungsform eines Filterelements; und
- Fig. 10:: eine schematische perspektivische Schnittansicht des Filterelements gemäß Fig. 9.

In den Figuren bezeichnen dieselben Bezugszeichen gleiche oder funktionsgleiche Elemente, soweit nichts Gegenteiliges angegeben ist.

### Ausführungsform(en) der Erfindung

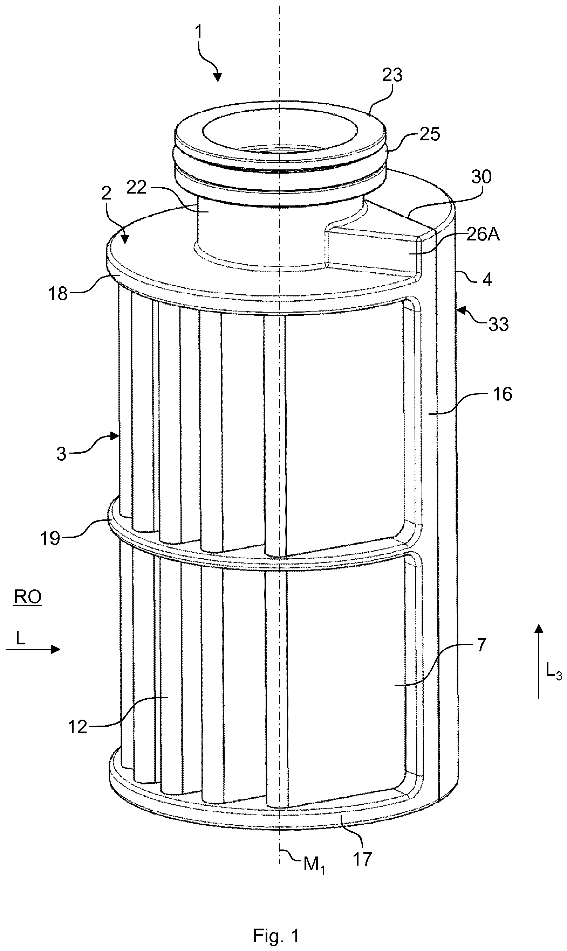

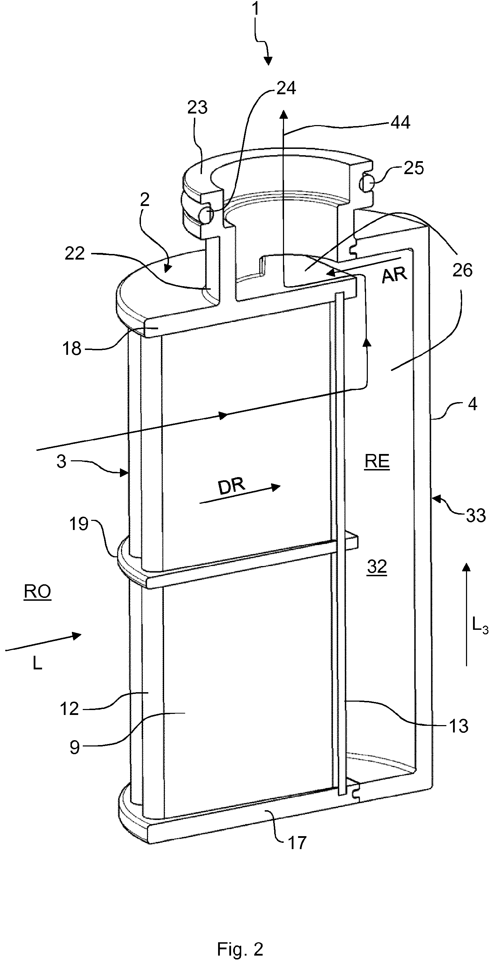

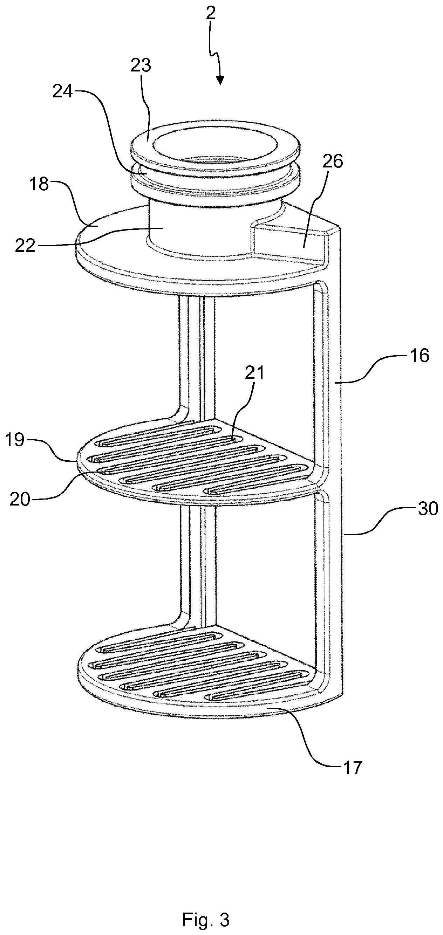

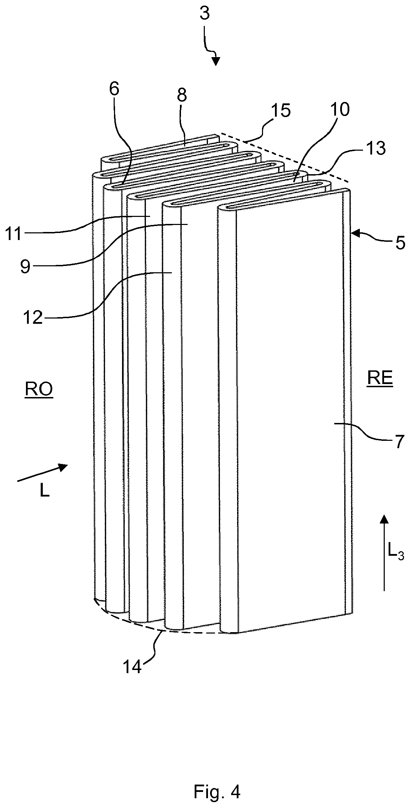

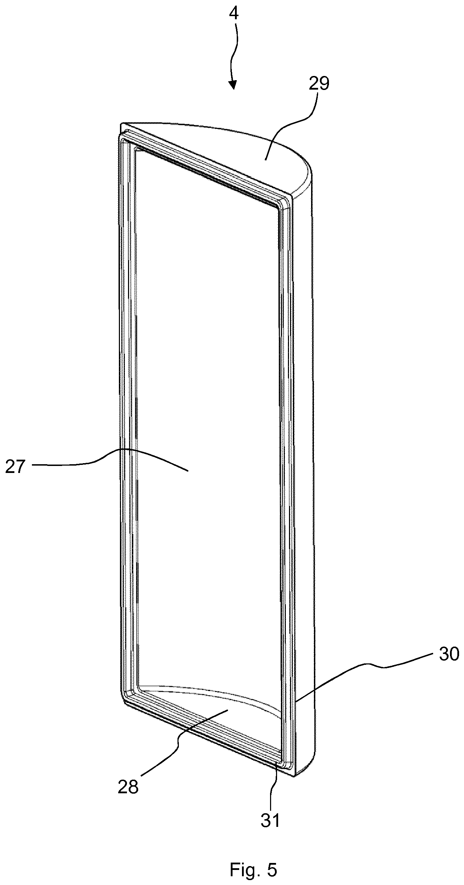

Die Fig. 1 zeigt eine schematische perspektivische Ansicht einer Ausführungsform eines Filterelements 1. Die Fig. 2 zeigt eine schematische perspektivische Schnittansicht des Filterelements 1 gemäß der Fig. 1. Die Fig. 3 zeigt eine schematische perspektivische Ansicht einer Ausführungsform eines Stützrahmens 2 für das Filterelement 1 gemäß der Fig. 1. Die Fig. 4 zeigt eine schematische perspektivische Ansicht einer Ausführungsform eines Faltenbalgs 3 für das Filterelement 1 gemäß der Fig. 1. Die Fig. 5 zeigt eine schematische perspektivische Ansicht einer Ausführungsform eines Gehäuseelements 4 für das Filterelement 1 gemäß der Fig. 1. Im Folgenden wird auf die Fig. 1 bis 5 gleichzeitig Bezug genommen.

Das Filterelement 1 ist dazu eingerichtet, Fluide L, wie beispielsweise Luft oder andere Gase, Flüssigkeiten, insbesondere flüssige Betriebsmittel eines Fahrzeugs, insbesondere eines Kraftfahrzeugs, wie Öl, Wasser, Diesel, Benzin, Kerosin oder Harnstofflösung zu filtern. Insbesondere ist das Filterelement 1 ein Luftfilterelement. Das Filterelement 1 kann Anwendung in Kraftfahrzeugen, Wasserfahrzeugen, Schienenfahrzeugen, landwirtschaftlichen Fahrzeugen, Baumaschinen, Luftfahrzeugen oder dergleichen finden. Ferner kann das Filterelement 1 auch bei immobilen Anwendungen, wie beispielsweise in der Gebäudetechnik, eingesetzt werden.

Wie die Fig. 4 zeigt, ist ein Faltenbalg 3 des Filterelements 1 aus einem gefalteten Filtermedium 5 gebildet. In der Orientierung der Fig. 4 sind oberseitig an dem Faltenbalg 3 Faltprofile 6 zu erkennen. Der Faltenbalg 3 weist zwei Endfalten 7, 8 auf, zwischen denen eine Vielzahl Faltabschnitte 9, 10, 11 angeordnet sind, von denen in der Fig. 4 nur drei mit einem Bezugszeichen versehen sind. Die Faltabschnitte 9, 10, 11 sind durch Faltkanten 12, 13, von denen in der Fig. 4 nur zwei mit einem Bezugszeichen versehen sind, voneinander getrennt. Das Filtermedium 5 ist dabei entlang der Faltkanten 12, 13 so gefaltet, dass dieses zickzackförmig oder ziehharmonikaförmig geformt ist. Anstelle von Faltungen kann das Filtermedium 5 auch mit Biegungen oder Wellen versehen sein. Das Filtermedium 5 kann zum Beispiel ein synthetisches Vliesmaterial, Papier, Gelege oder Gewebe umfassen. Das Filtermedium 5 kann einlagig oder mehrlagig sein.

Wie die Fig. 4 weiter zeigt, haben die Faltabschnitte 9, 10, 11 unterschiedliche Faltenhöhen. Unter Faltenhöhe ist der Abstand zwischen Faltkanten 12, 13 eines Faltabschnitts 9, 10, 11 zu verstehen. Die Faltkanten 12 können als äußere oder erste Faltkanten bezeichnet werden. Die Faltkanten 13 können als innere oder zweite Faltkanten bezeichnet werden. Die Fig. 4 zeigt eine erste oder äußere Einhüllende 14 der Faltkanten 12 und eine zweite oder innere Einhüllende 15 der Faltkanten 13. Die erste Einhüllende 14 kann bogenförmig, insbesondere kreisbogenförmig, sein und die zweite Einhüllende 15 kann eine Gerade sein. Die Faltkanten 12, 13 verlaufen in einer Längsrichtung L₃ des Faltenbalgs 3.

Das Filtermedium 5 bzw. der Faltenbalg 3 umschließt ein geometrisches Volumen, das wie in der Fig. 4 angedeutet einem Zylinder entspricht, wobei die Grundfläche von den Endfalten 7, 8 und den Einhüllenden 13, 14 gebildet ist und die Höhe entlang der Längsrichtung L₃ verläuft.

Im Betrieb des Filterelements 1 strömt das zu reinigendes Fluid L, beispielsweise Luft oder ein flüssiges Betriebsmittel, wie Öl, Wasser, Benzin, Diesel, Kerosin, Harnstofflösung oder dergleichen durch das gefaltete Filtermedium 5 hindurch von einer Rohseite RO zu einer Reinseite RE desselben. Eine Durchströmrichtung DR ist von der Rohseite RO in Richtung der Reinseite RE bzw. von den ersten Faltkanten 12 in Richtung der zweiten Faltkanten 13 orientiert. Die Durchströmrichtung DR kann auch umgekehrt orientiert sein. In diesem Fall ist die Reinseite RE die Rohseite RO des Filterelements 1 und umgekehrt.

Wie in den Fig. 1 bis 3 gezeigt, umfasst das Filterelement einen Stützrahmen 2. Der Stütz_rahmen 2 ist aus einem Kunststoffmaterial, wie beispielsweise einem Polyamid oder einem Acrylnitril-Butadien-Styrol, gefertigt. Der Stützrahmen 2 ist ein Kunststoffspritzgussbauteil, das in einem Kunststoffspritzgussverfahren an den Faltenbalg 3 angespritzt ist. Hierdurch wird eine fluiddichte und dauerhafte Verbindung zwischen dem Faltenbalg 3 und dem Stützrahmen 2 erreicht. Der Stützrahmen 2 weist einen rechteckförmigen Rahmenabschnitt 16 auf, an dem die Endfalten 7, 8 des Faltenbalgs 3 befestigt sind. Weiterhin umfasst der Stützrahmen 2 einen unteren oder ersten Endscheibenabschnitt 17 und einen oberen oder zweiten Endscheibenabschnitt 18. Die Endscheibenabschnitte 17, 18 sind voneinander beabstandet angeordnet, wobei der Faltenbalg 3 zwischen den Endscheibenabschnitten 17, 18 angeordnet ist. Die Endscheibenabschnitte 17, 18 sind auf den Faltprofilen 6 des Faltenbalgs 3 angeordnet und schließen diesen jeweils stirnseitig fluiddicht ab. Die Endscheibenabschnitte 17, 18 können eine halbkreisförmige Geometrie aufweisen. In die Endscheibenabschnitte 17, 18 sind die Faltprofile 6 eingebettet.

Der Stützrahmen 2 umfasst weiterhin einen, insbesondere mittig, zwischen den Endscheibenabschnitten 17, 18 angeordneten Stützabschnitt 19. Mit Hilfe des Stützabschnitts 19 ist der Faltenbalg 3 mittig abgestützt, so dass dieser beim Durchströmen mit dem Fluid L nicht kollabiert. Der Stützabschnitt 19 ist optional. Bei Verwendung des Stützabschnitts 19 können besonders dünne und labile Filtermedien 5 für den Faltenbalg 3 eingesetzt werden. Die Abstützung der Faltabschnitte 9, 10, 11 kann bis zum jeweiligen Faltengrund der Faltabschnitte 9, 10, 11, das heißt, bis zu den Faltkanten 12, 13 realisiert werden. Hierzu weist der Stützabschnitt 19 Stützrippen 20, 21 auf, von denen in der Fig. 3 nur zwei mit einem Bezugszeichen versehen sind.

Oberseitig, das heißt dem ersten Endscheibenabschnitt 17 abgewandt, erstreckt sich aus dem zweiten Endscheibenabschnitt 18 ein rohrförmiger Anschlussstutzen 22 mit kreisförmigen Querschnitt heraus, der einteilig mit dem zweiten Endscheibenabschnitt 18 gebildet ist. Der Anschlussstutzen 22 ist zentrisch an dem zweiten Endscheibenabschnitt 18 vorgesehen. Der Anschlussstutzen 22 weist einen ringförmigen Flansch 23 mit einer umlaufenden Ringnut 24 auf. In der Ringnut 24 ist ein Dichtelement 25, beispielsweise ein O-Ring, aufgenommen. Mit Hilfe des Dichtelements 25 kann das Filterelement 1 gegenüber einer später noch zu erläuternden Filteraufnahme abgedichtet werden.

Der Stützrahmen 2 umfasst weiterhin einen Fluidführungskanal 26, der sich wie der Flansch 23 oberseitig aus dem zweiten Endscheibenabschnitt 18 herauserstreckt. In Figur 1 ist ein Abschnitt des Fluidführungskanals der oberen Endscheibe (18) mit 26A bezeichnet. Mit Hilfe des Fluidführungskanalabschnitts 26A wird das gefilterte Fluid L entgegen der Durchströmrichtung DR in einer Ausströmrichtung AR hin zu dem Flansch 23 transportiert und über den zweiten Endscheibenabschnitt 18 geführt. In dem Flansch 23 wird das gefilterte Fluid L nochmals umgelenkt, beispielsweise um 90° relativ zu der Ausströmrichtung AR. Der Fluidführungskanal 26 ist oberhalb des zweiten Endscheibenabschnitts 18 angeordnet, so dass der zweite Endscheibenabschnitt 18 zwischen dem Fluidführungskanal 26 und dem Faltenbalg 3 positioniert ist. In der Orientierung der Fig. 1 und 2 ist der Fluidführungskanal 26 oberhalb des zweiten Endscheibenabschnitts 18 positioniert.

Das Filterelement 1 umfasst ein in Fig. 5 gezeigtes Abdeckelement 4. Das Abdeckelement 4 ist, wie der Stützrahmen 2, aus einem Kunststoffmaterial gefertigt. Das Abdeckelement 4 kann aus demselben Material gefertigt sein wie der Stützrahmen 2. Das Abdeckelement 4 ist ein Kunststoffspritzgussbauteil. Das Abdeckelement 4 ist fest und fluiddicht mit dem Stützrahmen 2, insbesondere dem Rahmenabschnitt 16, verbunden. Beispielsweise kann das Abdeckelement 4 mit dem Stützrahmen 2 verklebt oder verschweißt sein. Das Abdeckelement 4 umfasst einen bogenförmig, insbesondere kreisbogenförmig, gekrümmten Mantelabschnitt 27 und zwei voneinander beabstandet angeordnete plattenförmige Endabschnitte 28, 29, die einteilig mit dem Mantelabschnitt 27 ausgebildet sind und zwischen denen der Mantelabschnitt 27 angeordnet ist. An einer Schnittstelle 30 des Abdeckelements 4 und des Stützrahmens 2 kann an dem Abdeckelement 4 eine umlaufende Rippe 31 vorgesehen sein, die dazu eingerichtet ist, in eine an dem Rahmenabschnitt 16 und dem Anschlussstutzen 22 des Stützrahmens 2 vor-gesehene Nut formschlüssig einzugreifen. Dies erleichtert die Montage des Abdeck-elements 4 an dem Stützrahmen 2.

Der Stützrahmen 2 und das Abdeckelement 4 bilden, wie in der Fig. 1 gezeigt, gemeinsam eine kreiszylinderförmige Außengeometrie des Filterelements 1, die rotations-symmetrisch zu einer Rotations- oder Mittelachse M₁ ist. Das Abdeckelement 4 umschließt mit dem Stützrahmen 2 einen Reinfluidbereich 32 des Filterelements 1. Das Abdeckelement 4 und der Stützrahmen 2 bilden gemeinsam einen äußeren Abschluss oder eine Art Gehäuse 33 des Filterelements 1. Man kann auch von einem Gehäuseelement 4 sprechen.

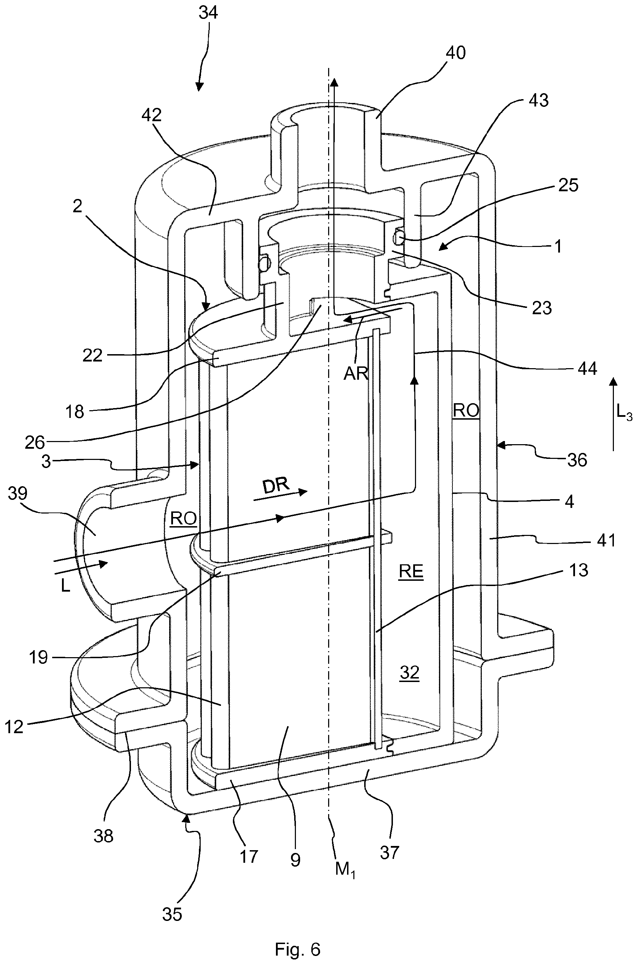

Die Fig. 6 zeigt eine schematische perspektivische Schnittansicht einer Ausführungsform einer Filteranordnung 34 mit einem derartigen Filterelement 1. Die Filteranordnung 34 umfasst ein Filtergehäuse oder eine Filteraufnahme 35, in der das Filterelement 1 aufgenommen ist. Die Filteraufnahme 35 kann mehrteilig sein und ein topfförmiges Aufnahmeelement 36 sowie einen topfförmigen Deckel 37 umfassen, die an einer Schnittstelle 38 fluiddicht miteinander verbunden sind. Die Filteraufnahme 35 weist einen rohrförmigen Einströmstutzen 39 und einen rohrförmigen Ausströmstutzen 40 auf. Das Fluid L strömt durch den Einströmstutzen 39 in die Filteraufnahme 35 ein und durch den Ausströmstutzen 40 wieder heraus. Das Fluid L kann auch umgekehrt strömen, so dass der Einströmstutzen 39 ein Ausströmstutzen und der Ausströmstutzen 40 ein Einströmstutzen ist. Der Einströmstutzen 39 ist senkrecht zu dem Ausströmstutzen 40 positioniert. Der Einströmstutzen 39 ist an einem rohrförmigen Mantelabschnitt 41 des Aufnahmeelements 36 vorgesehen und erstreckt sich radial seitlich aus diesem heraus. Der Ausströmstutzen 40 ist mittig an einem Deckelabschnitt 42 des Aufnahmeelements 36 vorgesehen und erstreckt sich oberseitig aus diesem heraus. Unterseitig, das heißt gegenüberliegend dem Ausströmstutzen 40 ist an dem Deckelabschnitt 42 ein Aufnahmebereich 43 zum Aufnehmen des Flansches 23 des Filterelements 1 vorgesehen. Das Dichtelement 25 dichtet den Flansch 23 fluiddicht radial gegenüber dem Aufnahmebereich 43 ab. Der erste Endscheibenabschnitt 17 des Stützrahmens 2 liegt dabei an dem Deckel 37 an. Zum Austauschen des Filterelements 1 wird der Deckel 37 abgenommen und das Filterelement 1 aus dem Aufnahmeelement 36 herausgezogen.

Die Funktionalität des Filterelements 1 bzw. der Filteranordnung 34 wird im Folgenden erläutert. Zu reinigendes Fluid L strömt in der Durchströmrichtung DR von der Rohseite RO des Filterelements 1 durch den Faltenbalg 3 hindurch auf die Reinseite RE, wobei das Fluid L von herauszufilternden Stoffen wie beispielsweise Staub oder Sand gereinigt wird. In dem Reinfluidbereich 32 wird das gereinigte Fluid L umgelenkt, so dass es in der Längsrichtung L₃ in Richtung des zweiten Endscheibenabschnitts 18 strömt. An dem zweiten Endscheibenabschnitt 18 strömt das Fluid L in den Fluidführungskanal 26 entgegen der Durchströmrichtung DR in der Ausströmrichtung AR. Man kann sagen, dass in der dargestellten Konfiguration der Sammelraum 32 für Reinfluid ein Teil des Fluidführungskanals 26 ist. Dabei strömt das Fluid L über den zweiten Endscheibenabschnitt 18 an einer dem Faltenbalg 3 abgewandten Seite, insbesondere einer Oberseite, desselben. In dem Anschlussstutzen 22 wird das Fluid L erneut umgelenkt, um dann in der Längsrichtung L₃ aus dem Anschlussstutzen 22 auszuströmen. Ein Strömungsweg 44 des Fluids L durch das Filterelement 1 bzw. durch die Filteranordnung 34 ist in den Fig. 2 und 6 mit Hilfe eines Pfeils gekennzeichnet.

Dadurch, dass der Anschlussstutzen 22 zentrisch an dem zweiten Endscheibenabschnitt 18 vorgesehen ist, kann das Filterelement 1 in für bekannte Filterelemente mit sternförmigem Faltenbalg ausgelegte Filteraufnahmen 35 eingesetzt werden. Hierdurch ist ein breiter Anwendungsbereich für das Filterelement 1 gewährleistet. Im Vergleich zu einem einen sternförmig gefalteten Faltenbalg aufweisenden Filterelement weist das beschriebene Filterelement 1 eine signifikant vergrößerte Oberfläche des Filtermediums 5 auf, da die Faltabschnitte 9, 10, 11 durch den Verzicht auf die sternförmige Faltung enger gefaltet werden können.

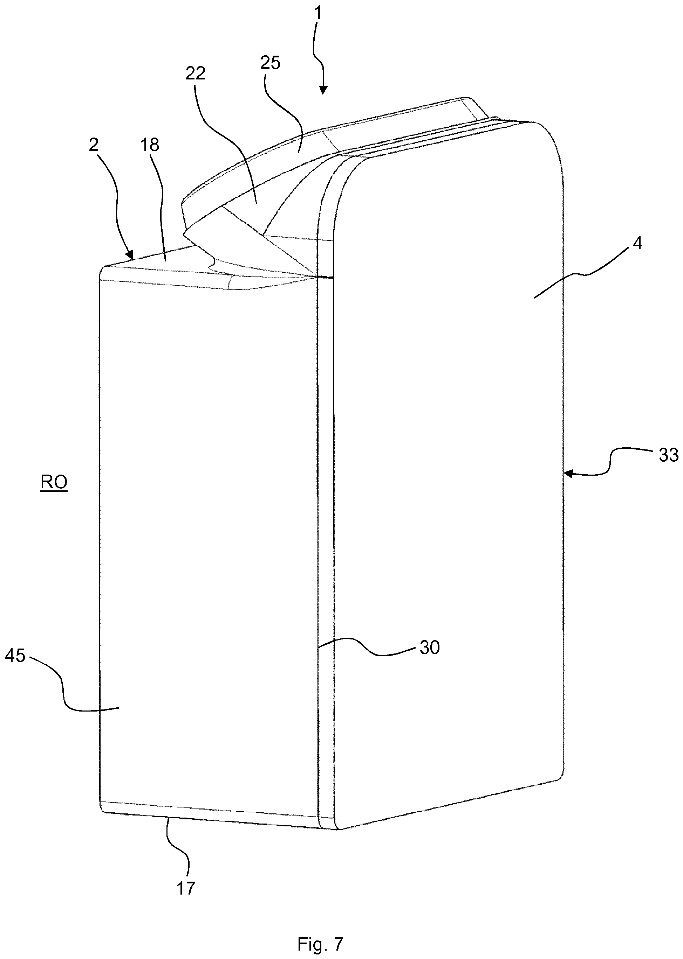

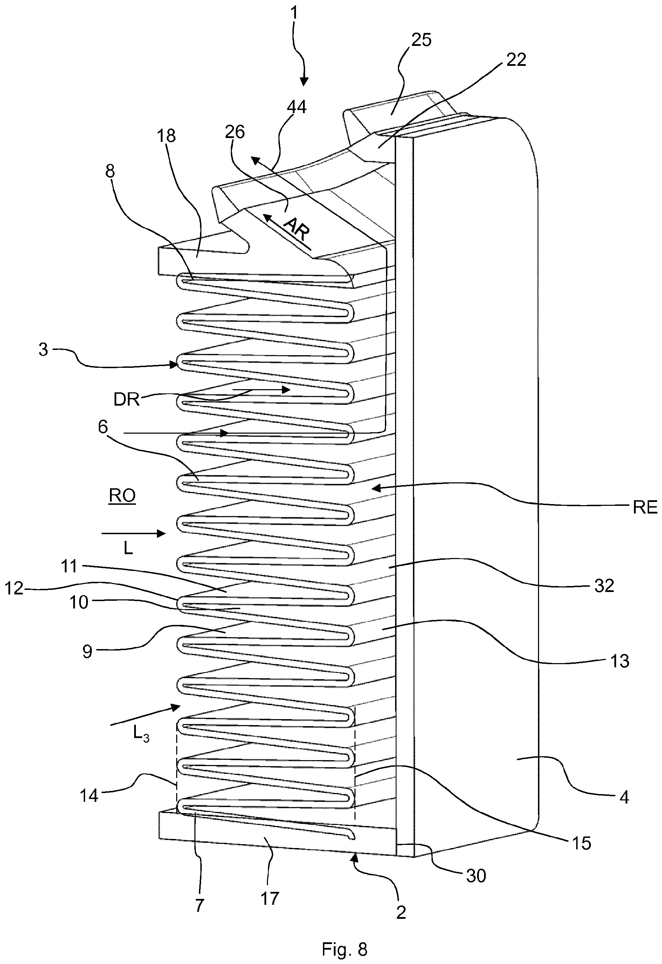

Die Fig. 7 zeigt eine schematische perspektivische Ansicht einer weiteren Ausführungsform eines Filterelements 1. Die Fig. 8 zeigt eine schematische perspektivische Schnittansicht des Filterelements 1 gemäß der Fig. 7. Im Folgenden wird auf die Fig. 7 und 8 gleichzeitig Bezug genommen. Bei der dargestellten Ausführungsform sind die Endscheiben 17, 18 an Endfaltenabschnitten 7, 8 angebracht und nicht auf die Faltprofile, wie es in den vorherigen Figuren angedeutet ist.

Das Filterelement 1 gemäß der Fig. 7 und 8 unterscheidet sich von dem Filterelement 1 gemäß der Fig. 1 bis 5 ferner dadurch, dass der Faltenbalg 3 keine variable, sondern eine konstante Faltenhöhe aufweist. Das heißt, die Faltabschnitte 9, 10, 11 sind alle gleich lang. Die Einhüllenden 14, 15 sind jeweils durch eine Gerade gebildet. Das von dem Filtermedium eingeschlossene geometrische Volumen entspricht einem Quader. Ferner ist der Faltenbalg 3 so angeordnet, dass die Endfalten 7, 8 mit rechteckförmigen Endscheibenabschnitten 17, 18 des Stützrahmens 2 fest verbunden sind. Das heißt, die Längsrichtung des Faltenpacks L₃ ist im Vergleich zu dem Filterelement 1 gemäß der Fig. 1 bis 5 um 90° gedreht. Das Faltprofil 6 ist mit beidseits des Faltenbalgs 3 angeordneten rechteckförmigen Seitenabschnitten 45 des Stützrahmens 2 abgeschlossen.

Der Anschlussstutzen 22 weist einen rechteckförmigen Querschnitt auf und ist nicht zentrisch an dem zweiten Endscheibenabschnitt 18 sondern seitlich an diesem vorgesehen. Der Anschlussstutzen 22 ist ferner schräg, beispielsweise in einem Winkel von 45° relativ zu dem zweiten Endscheibenabschnitt 18 positioniert und ragt in der Orientierung der Fig. 7 und 8 schräg nach oben. Umlaufend um den Anschlussstutzen 22 ist ein Dichtelement 25 in Form einer Dichtlippe vorgesehen. Das Dichtelement 25 kann aus einem elastisch verformbaren Kunststoffmaterial, beispielsweise aus einem thermoplastischen Elastomer, gefertigt sein. Das Dichtelement 25 kann in einem Kunststoffspritzgussverfahren an den Stützrahmen 2 angespritzt sein.

In den Anschlussstutzen 22 ist der Fluidführungskanal 26 integriert, der das gefilterte Fluid L über den zweiten Endscheibenabschnitt 18 führt. Die Ausströmrichtung AR ist entgegengesetzt der Durchströmrichtung DR orientiert, wobei die Ausströmrichtung AR schräg gegenüber der Durchströmrichtung DR angeordnet ist. Ein plattenförmiges rechteckiges Gehäuseelement 4 schließt den Stützrahmen 2 zum Bilden des Reinfluidbereichs 32 rückseitig fluiddicht ab.

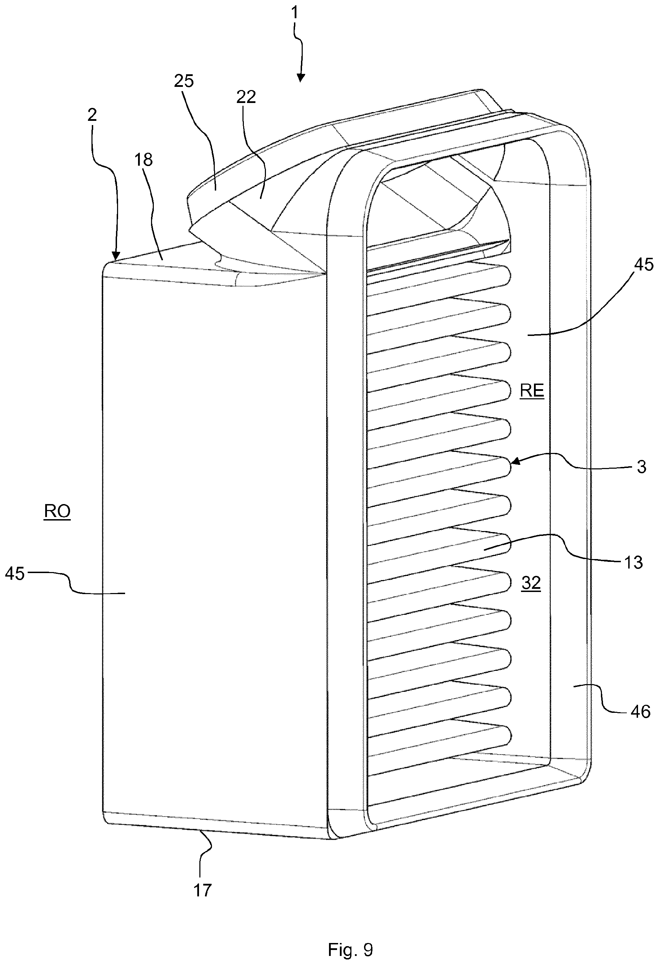

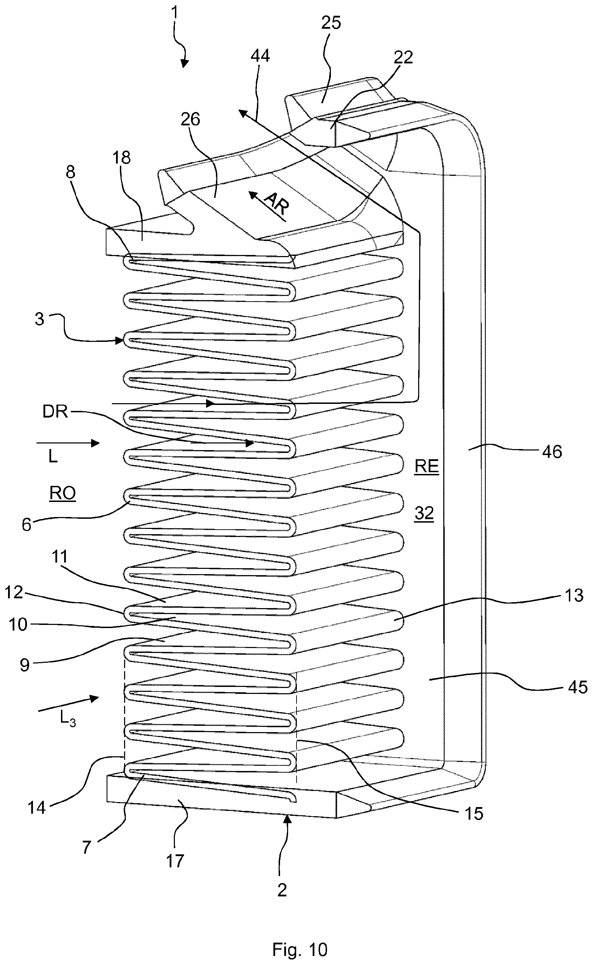

Die Fig. 9 zeigt eine schematische perspektivische Ansicht einer weiteren Ausführungsform eines Filterelements 1. Die Fig. 10 zeigt eine schematische perspektivische Schnittansicht des Filterelements 1 gemäß der Fig. 9. Im Folgenden wird auf die Fig. 9 und 10 gleichzeitig Bezug genommen.

Das Filterelement 1 gemäß der Fig. 9 und 10 unterscheidet sich von dem Filterelement 1 gemäß der Fig. 7 und 8 im Wesentlichen dadurch, dass auf das Gehäuseelement 4 verzichtet wird. Anstatt des Gehäuseelements 4 ist rückseitig an dem Stützrahmen 2 ein umlaufendes Dichtelement 46 vorgesehen. Das Dichtelement 46 kann aus einem elastisch verformbaren Kunststoffmaterial, beispielsweise aus einem thermoplastischen Elastomer, gefertigt sein. Das Dichtelement 46 kann in einem Kunststoffspritzgussverfahren an den Stützrahmen 2 angespritzt sein. Mit Hilfe des Dichtelements 46 kann das Filterelement 1 gegenüber einer Gehäusewandung einer entsprechenden Filteraufnahme für das Filterelement 1 abgedichtet werden. Das Gehäuseelement 4 ist hierdurch verzichtbar.

Die vorgeschlagenen Filterelemente erlauben insbesondere den Einsatz von nicht sternförmig gefalteten Filtermedien, können eine große Filterfläche realisieren und schaffen bei einer Herstellung im Spritzgusswerkzeug durch Umspritzen des Filtermediums eine gute Kantenabdichtung.

Obwohl die vorliegende Erfindung anhand verschiedener Ausführungsbeispiele beschrieben wurde, ist sie darauf nicht beschränkt, sondern auf vielfältige Weise modifizierbar. Die dargestellten Geometrien können verändert werden. Beispielsweise kann der Faltenbalg 3 der Filterelemente 1 gemäß der Fig. 7 und 9 so gedreht sein, dass die Faltenprofile 6 und nicht die Endfalten 7, 8 mit den Endscheibenabschnitten 17, 18 des Stützrahmens 2 fest verbunden sind.

## Patentansprüche

1. Filterelement (1), insbesondere Luftfilterelement, mit einem gefalteten Filtermedium (5) und einem Stützrahmen (2), mit dem das Filtermedium (5) verbunden ist, wobei das Filtermedium (5) zwischen einem ersten Endscheibenabschnitt (17) und einem zweiten Endscheibenabschnitt (18) des Stützrahmens (2) angeordnet ist und wobei der Stützrahmen (2) einen Fluidführungskanal (26) aufweist, der dazu eingerichtet ist, bei einem Durchströmen des Filtermediums (5) mit einem Fluid (L) das Fluid (L) so zu leiten, dass es an einer dem Filtermedium (5) abgewandten Seite eines der Endscheibenabschnitte (17, 18) entlang führbar ist und wobei der Stützrahmen (2) in einem Kunststoffspritzgussverfahren an das Filtermedium (5) angespritzt ist.

2. Filterelement nach Anspruch 1, wobei der Fluidführungskanal (26) so angeordnet ist, dass einer der Endscheibenabschnitte (17, 18) zwischen einem Abschnitt (26A) des Fluidführungskanals und dem Filtermedium (5) angeordnet ist.

3. Filterelement nach einem der Ansprüche 1 oder 2, wobei der Fluidführungskanal (26) dazu eingerichtet ist, bei dem Durchströmen des Filtermediums (5) mit dem Fluid (L) das Fluid (L) so zu leiten, dass eine Ausströmrichtung (AR) des Fluids (L) durch den Fluidführungskanal (26) entgegen einer Durchströmrichtung (DR) des Fluids (L) durch das Filtermedium (5) angeordnet ist.

4. Filterelement nach Anspruch 3, wobei die Durchströmrichtung (DR) senkrecht zu Faltkanten (12, 13) des Filtermediums (5) angeordnet ist.

5. Filterelement nach einem der Ansprüche 1 bis 4, wobei der Stützrahmen (2) und ein mit dem Stützrahmen (2) verbundenes, insbesondere verschweißtes oder verklebtes, Abdeckelement (4) einen Abschluss des Filterelements (1) bilden.

6. Filterelement nach einem der Ansprüche 1 bis 5, wobei das Filterelement (1) eine kreiszylinderförmige Geometrie aufweist und einen an einem der Endscheibenabschnitte (17, 18) angeordneten Anschlussstutzen (22) zum Anschließen des Filterelements (1) an eine Filteraufnahme (35) umfasst und wobei der Anschlussstutzen (22) zentrisch an der zylinderförmigen Geometrie angeordnet ist.

7. Filterelement nach Anspruch 6, wobei der Fluidführungskanal (26) fluidisch mit dem Anschlussstutzen (22) verbunden ist.

8. Filterelement nach einem der Ansprüche 1 bis 7, wobei der Stützrahmen (2) einen zwischen den Endscheibenabschnitten (17, 18) angeordneten Stützabschnitt (19) mit Stützrippen (20, 21) zum Abstützen von Faltabschnitten (9, 10, 11) des Filtermediums (5) aufweist.

9. Filteranordnung (34) mit einem Filterelement (1) nach einem der Ansprüche 1 bis 8 und einer Filteraufnahme (35), in der das Filterelement (1) austauschbar aufgenommen ist.

## Claims

1. Filter element (1), in particular air filter element, having a folded filter medium (5) and a support frame (2) to which the filter medium (5) is connected, wherein the filter medium (5) is disposed between a first end disc portion (17) and a second end disc portion (18) of the support frame (2) and wherein the support frame (2) features a fluid guiding channel (26) which, when a fluid (L) flows through the filter medium (5), is meant to guide the fluid (L) in such a way that it can be guided along one of the end disc portions (17, 18) on a side facing away from the filter medium (5) and wherein the support frame (2) is injected to the filter medium (5) by means of a plastic injection-molding process.

2. Filter element according to claim 1, wherein the fluid guiding channel (26) is disposed in such a way that one of the end disc portions (17, 18) is disposed between a portion (26A) of the fluid guiding channel and the filter medium (5).

3. Filter element according to one of the claims 1 or 2, wherein the fluid guiding channel (26), when the fluid (L) flows through the filter medium (5), is meant to guide the fluid (L) in such a way that an outflow direction (AR) of the fluid (L) through the fluid guiding channel (26) is arranged opposite a flow direction (DR) of the fluid (L) through the filter medium (5).

4. Filter element according to claim 3, wherein the flow direction (DR) is disposed perpendicular to fold edges (12, 13) of the filter medium (5).

5. Filter element according to one of the claims 1 to 4, wherein the support frame (2) and a cover element (4) connected to the support frame (2), in particular welded or glued, form a closure of the filter element (1).

6. Filter element according to one of the claims 1 to 5, wherein the filter element (1) features a circular-cylindrical geometry and comprises a union (22) disposed on one of the end disc portions (17, 18) for connecting the filter element (1) to a filter seat (35) and wherein the union (22) is disposed centrally on the cylindrical geometry.

7. Filter element according to claim 6, wherein the fluid guiding channel (26) is fluidically connected to the union (22).

8. Filter element according to one of claims 1 to 7, wherein the support frame (2) features a support portion (19) disposed between the end end disc portions (17, 18) with supporting ribs (20, 21) for supporting fold sections (9, 10, 11) of the filter medium (5).

9. Filter arrangement (34) having a filter element (1) according to one of the claims 1 to 8 and a filter seat (35) in which the filter element (1) is replaceably accommodated.

## Revendications

1. Élément filtrant (1), notamment élément de filtre à air, avec un milieu filtrant (5) plié et un cadre de support (2) auquel le milieu filtrant (5) est relié, dans lequel le milieu filtrant (5) est disposé entre une première section du disque d'extrémité (17) et une seconde section du disque d'extrémité (18) du cadre de support (2) et dans lequel le cadre de support (2) présente un conduit de guidage de fluide (26) qui est conçu, lorsque le milieu filtrant (5) est parcouru par un fluide (L), pour guider le fluide (L) de sorte qu'il puisse être guidé le long d'une des sections du disque d'extrémité (17, 18) sur un côté opposé au milieu filtrant (5) et dans lequel le cadre de support (2) est moulé par injection sur le milieu filtrant (5) par un procédé de moulage par injection de matière plastique.

2. Élément filtrant selon la revendication 1, dans lequel le conduit de guidage de fluide (26) est disposé de telle sorte que l'une des sections du disque d'extrémité (17, 18) est disposée entre une section (26A) du conduit de guidage de fluide et le milieu filtrant (5).

3. Élément filtrant selon l'une des revendications 1 ou 2, dans lequel le conduit de guidage de fluide (26) est conçu, lorsque le milieu filtrant (5) est parcouru par le fluide, de guider le fluide (L) de telle sorte qu'un sens d'écoulement (AR) du fluide (L) à travers le conduit de guidage de fluide (26) est agencé dans le sens du flux (DR) du fluide (L) à travers le milieu filtrant (5).

4. Élément filtrant selon la revendication 3, dans lequel le sens du flux (DR) est agencé perpendiculairement aux arêtes de pliage (12, 13) du milieu filtrant (5).

5. Élément filtrant selon l'une des revendications 1 à 4, dans lequel le cadre de support (2) et un élément de couverture (4) relié au cadre de support (2), notamment soudé ou collé, forment une fermeture de l'élément filtrant (1).

6. Elément filtrant selon l'une des revendications 1 à 5, dans lequel l'élément filtrant (1) présente une géométrie cylindrique circulaire et comprend une tubulure de raccord (22) disposée sur l'une des sections du disque d'extrémité (17, 18) pour relier l'élément filtrant (1) à un logement de filtre (35), et dans lequel la tubulure de raccord (22) est disposée au centre de la géométrie cylindrique.

7. Élément filtrant selon la revendication 6, dans lequel le conduit de guidage de fluide (26) est relié fluidiquement à la tubulure de raccord (22).

8. Élément filtrant selon l'une des revendications 1 à 7, dans lequel le cadre de support (2) présente une section d'appui (19) disposée entre les sections du disque d'extrémité (17, 18) et doté de nervures d'appui (20, 21) pour supporter des sections de pliage (9, 10, 11) du milieu filtrant (5).

9. Agencement de filtre (34) avec un élément filtrant (1) selon l'une des revendications 1 à 8, et un logement de filtre (35) dans lequel l'élément filtrant (1) est logé de manière échangeable.
